# FASCICULE DE BREVET EUROPEEN

(11) **EP 2 645 844 B1**
(45) Date de publication et mention de la délivrance du brevet: **25.03.2015**
(21) Numéro de dépôt: 11771235.6
(22) Date de dépôt: 20.09.2011
(51) Int. Cl.: A01G 13/00

(54) **FILET DE PROTECTION CONTRE LE SOLEIL ET LES INTEMPÉRIES, ET NOTAMMENT CONTRE LA GRÊLE**
SICHERHEITSNETZ GEGEN SONNE UND WETTER, INKLUSIVE HAGEL
PROTECTION NET AGAINST SUN AND WEATHER CONDITIONS, INCLUDING HAIL

(30) Priorité: 29.11.2010 FR 1059855
(43) Date de publication de la demande: 09.10.2013
(73) Titulaire: MDB Texinov SA, 38110 Saint Didier de la Tour (FR)
(72) Inventeur: DUCOL, Jean-Paul, F-69170 Les Sauvages (FR); TANKERE, Jacques, F-01800 Meximieux (FR)
(74) Mandataire: Cabinet Laurent & Charras
(86) Numéro de dépôt international: PCT/FR2011/052165
(87) Numéro de publication internationale: WO 2012/072905

(56) Documents cités:
- WO-A1-92/12621
- FR-A1- 2 254 273
- FR-A1- 2 777 737
- FR-A1- 2 873 890

## Description

### DOMAINE DE L'INVENTION

L'invention concerne un filet, donc typiquement ajouré, destiné à la protection et à la sécurisation de cultures, notamment fruitières, pépinières ou maraichères, contre le soleil d'une part, et contre les intempéries, plus particulièrement contre la grêle d'autre part. Elle vise également un tel filet de protection contre certains insectes.

Le but recherché par la présente invention est non seulement d'assurer les fonctions de protection précitées, mais également de permettre son installation de manière simple et économique, et parallèlement de diminuer son coût de fabrication.

### ETAT ANTERIEUR DE LA TECHNIQUE

Depuis longtemps, on cherche à se prémunir des ravages des intempéries, et plus particulièrement de la grêle, des pluies violentes, voire du vent, notamment dans le domaine viticole, mais également dans celui du maraichage et des pépinières

On a par exemple décrit dans le document FR 2 777 737, FR-2 852 784 ou encore dans le FR-2 767 737, la mise en oeuvre de filets destinés à être installés au dessus de telles plantations. Ces filets sont accrochés sur les supports standards, typiquement constitués par des piquets et des fils d'acier des palissages traditionnels ou comportent un ou plusieurs câbles permettant d'assurer leur fixation sur des supports fixes en question, tels que par exemple des piquets ou autres systèmes équivalents.

La principale difficulté à laquelle on se heurte avec de tels filets réside dans leur installation d'une part, et dans leur déformation d'autre part, affectant leur efficacité outre leur capacité d'ajustement en terme de tension. Ce faisant, ces défauts d'ajustement sont susceptibles d'avoir des répercutions sur la protection effective des plantations, tant vis-à-vis des intempéries, qu'en termes de détérioration en raison de l'action inappropriée du filet sur lesdites plantations résultant d'une tension inadéquate avec formation de plis et de zones de contact ou de frottement sur la végétation et/ou sur les fruits.

L'objectif recherché par l'invention est de palier ces difficultés, et en outre, de simplifier la fabrication et la mise en oeuvre de tels filets.

### EXPOSE DE L'INVENTION

A cet effet, l'invention vise un filet de protection de plantations fruitières ou maraichères, outre de pépinières contre le soleil et contre les intempéries, notamment contre la grêle, la pluie, voire le vent, intégrant au moins un moyen linéaire de fixation sur deux ou plusieurs supports.

Selon l'invention, ledit filet définit des boutonnières sensiblement alignées, traversantes ou non traversantes, au niveau desquelles ledit moyen linéaire de fixation est dépourvu de lien fixe ou figé avec le filet, conférant ainsi audit moyen linéaire de fixation un degré de liberté longitudinale par rapport audit filet.

En fait, en raison de ce mode particulier d'intégration du ou des moyens linéaires de fixation au sein du filet, ledit moyen n'est pas figé dans la structure du filet, mais présente une certaine mobilité relative, mais limitée dans le sens de la longueur seulement dudit filet, mais pas dans le sens travers.

Le filet de l'invention peut être positionné selon toutes directions, notamment sensiblement horizontale, verticale ou inclinée afin de permettre l'évacuation des grêles ou un ombrage.

En d'autres termes, l'invention consiste à concevoir le filet de façon telle que le ou les moyens linéaires de fixation, typiquement constitués par des câbles, présentent une certaine liberté et sont notamment susceptibles de glisser par rapport au filet proprement dit, plus particulièrement selon la dimension principale du filet, et en l'espèce, selon la direction de production (sens chaine) du filet, pour notamment permettre sa fixation sur un support quelconque, outre son ajustement précis. En raison de cette structure, le positionnement des points d'accrochage s'en trouve également facilité. De plus, cette relative liberté du ou des câbles par rapport au filet permet de conférer à ce dernier une certaine mobilité en termes de pliage ou de dépliage en fonction des besoins de protection.

Avantageusement, le filet de l'invention est du type tricoté extensible selon une seule direction (sens trame ou sens travers), l'autre direction étant figée en termes d'extensibilité. Il est notamment réalisé en une seule étape sur un métier trameur type Rachel avec, ou sans insertion frontale de trame, le ou lesdits câbles étant insérés sens chaîne, c'est-à-dire sens production.

Par boutonnière traversante ou non traversante, on entend une ouverture réalisée au sein du filet, ladite ouverture traversant le filet de part en part dans le premier cas, ou au contraire, laissant apparaître une continuité du filet sous le câble. Dans un cas comme dans l'autre, la longueur des boutonnières, typiquement comprise entre 1 et 60 centimètres, permet la préhension du câble, notamment afin d'en assurer sa fixation par tous moyens sur un support quelconque.

L'intervalle entre deux boutonnières consécutives peut également être variable, au choix de l'utilisateur en fonction de l'application envisagée, et typiquement compris entre 1 centimètre et 1 mètre.

Le câble est par exemple du type métallique, éventuellement plastifié. Il peut également être de nature plastique, notamment polyéthylène traité anti UV ou polyamide, tel que par exemple de type PERLON (marque déposée).

Ce câble peut en outre être remplacé par une corde, voire par un sandow, et donc présentant une plus grande flexibilité, traitée également en termes de résistance et de comportement aux conditions atmosphériques. Enfin, dans le cas d'une corde, celle-ci peut avoir des propriétés spécifiques ou servir de moyen de « traction » du câble définitif à introduire dans le filet. De fait, par ce biais, il devient possible d'accrocher et de tirer, à l'instar d'un conducteur dans une gaine électrique, un câble éventuellement de plus gros diamètre et de plus grande résistance pour supporter le filet sur les palissages.

Les zones de solidarisation du câble au filet, c'est-à-dire en dehors des boutonnières, sont réalisées par deux types de fils :
- l'un maillant sur deux lignes d'aiguille ;
- l'autre travaillant en trame sectionnelle également sous deux aiguilles.

Le filet, comme déjà dit, peut être de type tricoté à une seule direction d'extensibilité, réalisé selon la technologie à mailles jetées, comportant un réseau de fils travaillant alternativement en maille et en trame sectionnelle ainsi que des fils totalement rectilignes dans le sens de production (sens chaîne).

Le filet est avantageusement réalisé à base de fils polyéthylène ou polypropylène traités anti UV. Il peut aussi être réalisé en polyamide, en PLA (polylactide) ou en PBS (Polybutylène succinate) ou tout autre polymère bio-sourcé.

Au niveau de la zone de réception du câble, le filet comprend avantageusement des zones de renfort réalisées selon un liage approprié pour autoriser une bonne finition du filet à la fois technique, c'est-à-dire résistante mécaniquement et sans risques de blessures de la végétation protégée.

Le filet peut également comporter dans le sens chaîne des fils de cuivre, susceptibles de permettre la lutte contre des maladies susceptibles d'affecter les plantations, et plus particulièrement la vigne, tel que le mildiou. On s'affranchit dans cette hypothèse du recours aux traitements phytosanitaires classiques.

Dans le même principe, le filet peut comporter dans le sens chaine, des fils chauffants, tels que des fils résistants électriquement, lesquels peuvent être connectés sur le secteur d'alimentation électrique ou sur une source autonome d'électricité type capteurs solaires ou batteries, situés directement sur les parcelles de terrains.

Selon une variante de l'invention, le moyen linéaire de fixation peut être constitué d'un ruban plat du type feuillard. Un tel ruban, par exemple métallique, est bien connu pour présenter une flexibilité beaucoup plus importante selon l'une de ses dimensions, en l'espèce celle perpendiculaire à la partie plane du ruban. Un tel ruban permet de disposer d'une plus grande résistance mécanique selon la direction principale du plan dans lequel il s'inscrit. Mais il peut également être mis en oeuvre pour servir de moyen de traction d'un câble de plus gros diamètre, à l'instar d'un conducteur au sein d'une gaine électrique.

### BREVE DESCRIPTION DES DESSINS

La manière dont l'invention peut être réalisée et les avantages qui en découlent, ressortiront mieux de l'exemple de réalisation qui suit, donné à titre indicatif et non limitatif à l'appui des figures annexées.
La figure 1 est une représentation schématique vue de dessus du filet conforme à l'invention.
Les figures 2a et 2b sont deux représentations schématiques de détail des dispositions du câble au sein du filet conforme à l'invention, respectivement au sein des boutonnières traversantes et non traversantes.
La figure 3 est une représentation schématique de l'installation d'un filet de l'invention sur une structure de palissage.
La figure 4 est une vue tendant à illustrer divers modes de fixation du filet conforme à l'invention.
La figure 5a est une représentation schématique tendant à illustrer un mode de réalisation de la partie fonctionnelle du filet.
La figure 5b est une représentation schématique tendant à illustrer un mode de liage du câble au sein dudit filet.
La figure 6 est une représentation schématique en section d'un mode particulier de réalisation de l'invention, selon lequel les boutonnières sont obturées sur l'une de leurs faces.
La figure 7 est une représentation schématique d'une enceinte de sécurisation de cultures, mettant en oeuvre le filet de l'invention.

### DESCRIPTION DETAILLEE DE L'INVENTION

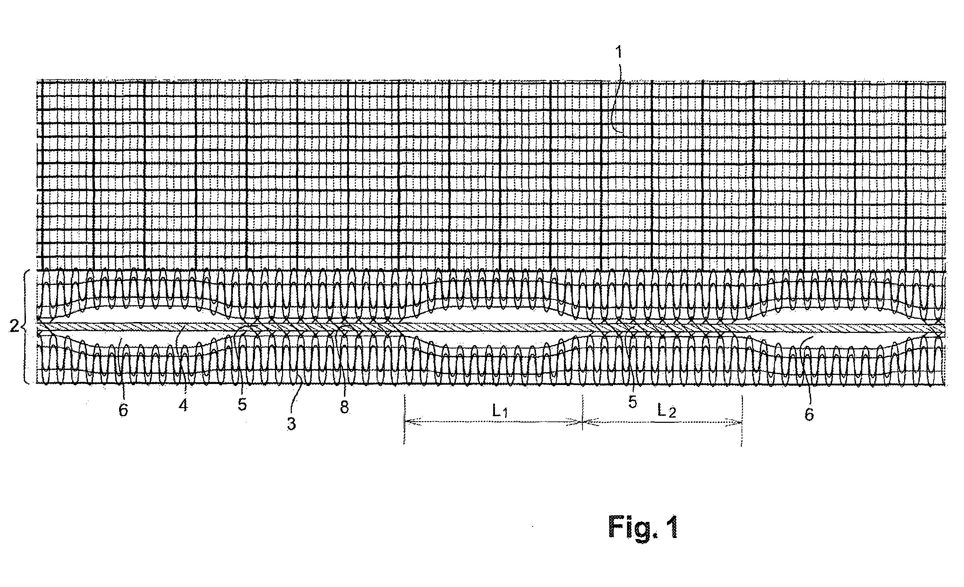

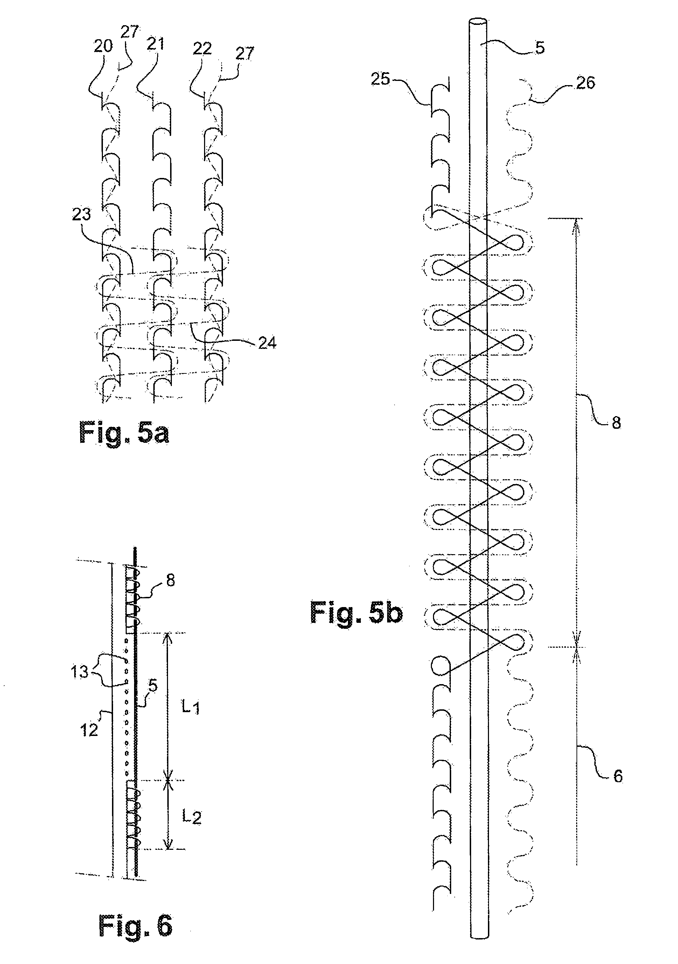

On a donc représenté en relation avec la figure 1 une vue de dessus d'une partie d'un filet conforme à l'invention. Ce filet comporte une partie fonctionnelle **1** constituée d'un tissé-tricoté à base de fils polyéthylène traités anti UV. L'armure particulière de cette partie fonctionnelle est en outre décrite à la figure 5a, et sur laquelle il sera revenu plus en détail ultérieurement.

Le bord ou lisière **2** de ce filet est renforcé, notamment par insertion de fils de renfort **3** travaillant en trame sectionnelle. Cette zone comporte des fils supplémentaires travaillant selon un liage indépendant de celui de la zone fonctionnelle du filet de façon à conférer une plus grande résistance à ce niveau et à retransmettre les efforts sur le câble **4,** sur lequel il va être revenu ci-après, sans risques de rupture du filet.

Indépendamment des jeux de fils très précis qui assurent la connexion avec le câble et qui le laissent glissant, c'est-à-dire présentant une certain liberté dans le sens chaîne, on ajoute en superposition avec les fils de fond, des trames sectionnelles qui relient les colonnes de chaînettes en sens transversal et confèrent alors une résistance additionnelle à ce niveau.

En outre et surtout, selon une caractéristique essentielle de l'invention, le filet reçoit au niveau de cette lisière **2** un câble **4,** en l'espèce métallique. Ce câble **4** s'étend selon la dimension principale du filet, et en l'espèce selon la direction de production du filet. Il présente une section typique de 1 à 5mm².

Il est maintenu au sein de celui-ci de manière ponctuelle au niveau de zones de liaison **5.** Corolairement, il est libre de tout lien entre lesdites zones de liaison, au niveau de zones dénommées « *boutonnières* » **6,** et dans l'exemple décrit sur la figure 1, des boutonnières traversantes, en ce sens qu'aucun fil ou élément équivalent n'est présent au niveau de ces boutonnières, hors ledit câble **4.**

De par le mode particulier de fixation du câble au sein de ce filet, et dont il sera par ailleurs revenu en relation avec la figure 5b, ledit câble peut coulisser librement dans le sens du filet, c'est-à-dire dans le sens d'extension dudit câble.

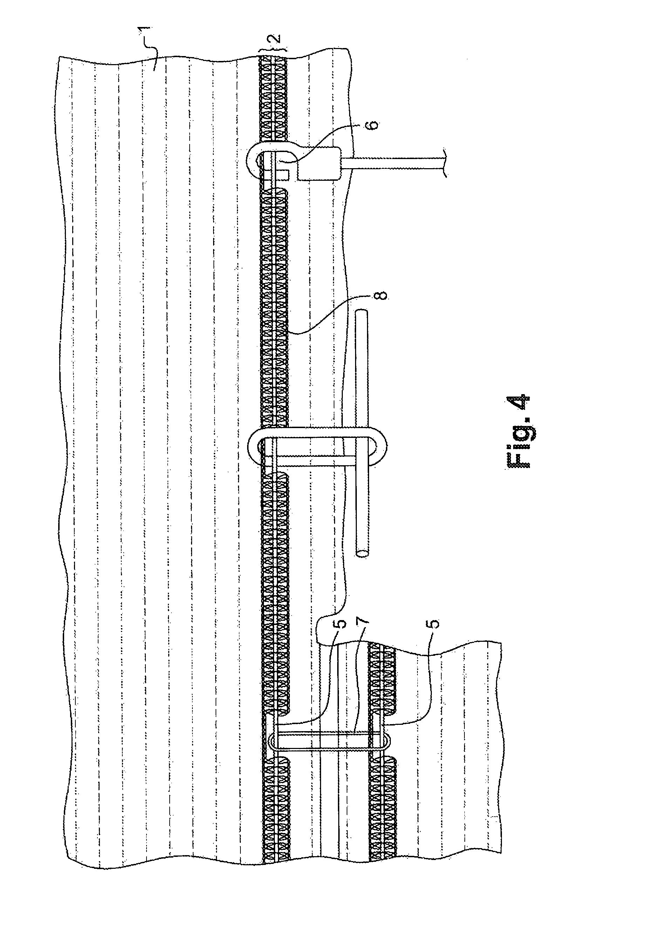

Cette caractéristique particulièrement avantageuse et novatrice, présente plusieurs avantages. Tout d'abord, on facilite la mise en place du filet au niveau de supports, tels que notamment des piquets de vigne dans le cadre de l'application particulière de la protection contre la grêle. En effet, en raison de la présence de zone de préhension libre du câble support **4,** il devient tout particulièrement aisé de procéder à sa saisie ou à son crochetage avec tout organe approprié (crochet, mousqueton, ....), tel que par exemple décrit en relation avec la figure 4. Plus précisément, la mise en oeuvre des boutonnières **6** permet un accrochage et un décrochage très rapide du filet par rapport aux organes de fixation, voire directement sur les supports, ce que ne permettaient pas d'obtenir les filets de l'état antérieur de la technique.

En outre, il est également possible d'associer deux filets du type en question entre eux, au moyen d'une agrafe **7** ou tout autre système équivalent, venant solidariser réversiblement le câble qu'ils intègrent chacun au niveau d'une boutonnière (voir là encore la figure 4).

De plus, en raison de la relative mobilité du câble **4** par rapport au filet, on peut ajuster de manière relativement précise le positionnement dudit filet, ainsi que sa tension. En outre, on peut assurer la mobilité du filet, notamment son pliage ou son dépliage à volonté en fonction des besoins de protection.

Dans l'exemple de la figure 1, le câble mis en oeuvre est de nature métallique. Il pourrait cependant être envisagé de remplacer ce câble métallique par un câble réalisé en matière plastique traité anti UV, voire par une corde, et avantageusement également traitée, ladite corde étant susceptible de présenter une certaine élasticité dans le sens de son extension, favorisant alors la tension du filet.

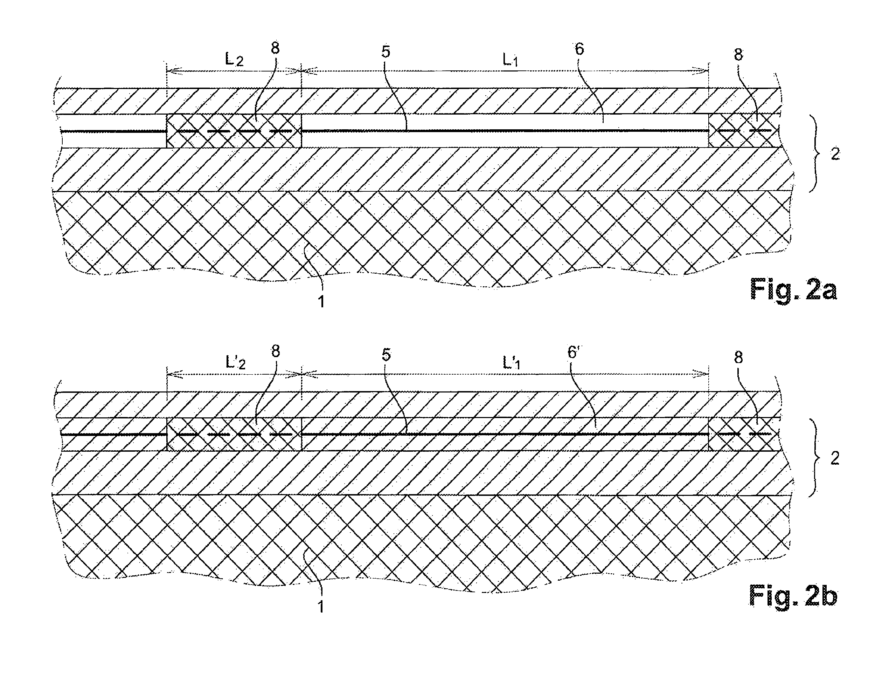

On a représenté sur la figure 2a une vue analogue à la figure 1, c'est-à-dire avec les boutonnières **6** ouvertes. Celle-ci est placée entre deux zones de liaison **8** du câble **4** au filet.

On peut cependant, dans certaines applications particulières, notamment de lutte contre les insectes, prévoir des boutonnières semi-fermées **6',** c'est-à-dire dont le fond est obturé par le filet, seule la face supérieure desdites boutonnières étant accessible et libérant le câble **4,** à l'instar de ce qui a été représenté en figure 2b. Ce faisant, le câble demeure saisissable et préhensible, mais pour autant, le filet forme obstacle, notamment aux insectes, même au niveau desdites boutonnières.

Dans une telle configuration, le câble **4** demeure, à l'instar de ce qui a d'ores et déjà été décrit, lié de manière « glissante » au filet au niveau des zones **8** ou **L2.** Cependant, lorsqu'il est libre (zone **L1**), le câble **5** « repose » sur une face **12** dudit filet.

De fait, la structure est dans ce cas dissymétrique, en ce sens que tout en conservant le même principe de boutonnière dans la zone **6'**, on maintient une continuité du filet sur la face **12** de façon à ne pas présenter de trous sur le filet, ce qui est indispensable dans les application pour lesquelles on doit s'opposer au passage d'insectes notamment en cultures biologiques ou en lutte intégrée.

Ainsi, afin de conserver une enceinte fermée, ce moyen permet tout à la fois de disposer d'une fixation optimisée du filet par le câble **4** ainsi intégré et d'une continuité d'étanchéité de l'enceinte (abri climatique, serre, ...) vis-à-vis des insectes qui viennent soit de l'extérieur ou qui sont volontairement disposés à l'intérieur dans le cas de la lutte intégrée.

On a représenté sur la figure 6 une vue en section d'une telle configuration, et qui permet notamment de visualiser les fils **13** qui assurent la fermeture de la boutonnière **6'** tout en laissant libre le câble à ce niveau.

La réalisation de cette fermeture de la boutonnière **6'** peut être de même nature que la zone fonctionnelle **1** du filet. On peut cependant envisager de réaliser ce « remplissage » au moyen d'un autre jeu de fils installés sur une autre barre de guidage. Ces fils travaillant notamment en trames sectionnelles ou jetées sous de deux ou trois aiguilles. Ces fils doivent être disposés sur une barre de guidage installée à l'arrière du faisceau de barres de façon à se placer derrière le câble **4,** qui lui reste donc dégagé, selon ce qui est souhaité.

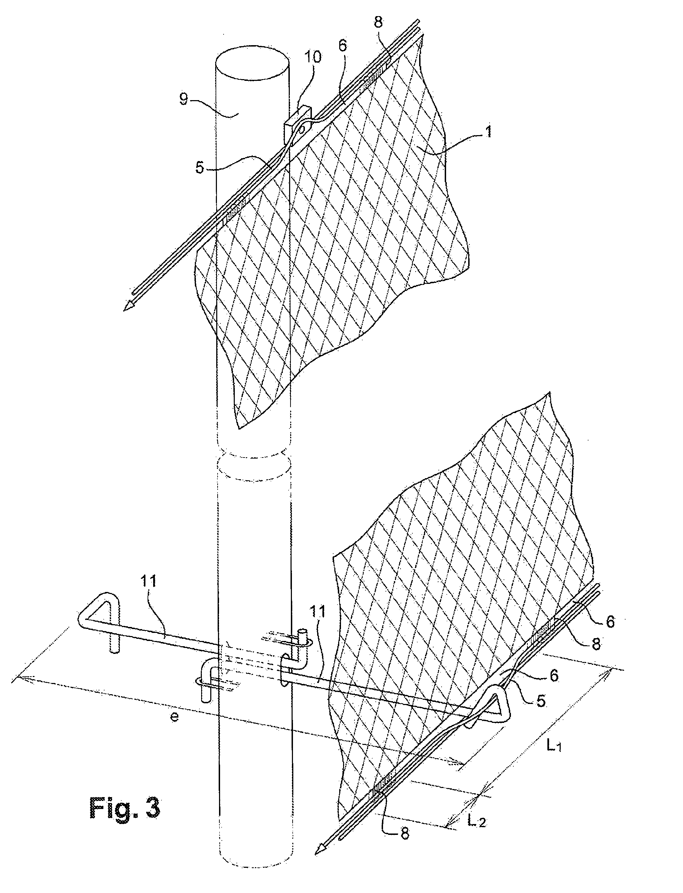

On a décrit en relation avec les figures 3 et 4, des modes d'application du filet conforme à l'invention. Sur la figure 3, on observe par exemple la fixation du filet de l'invention en zone supérieure d'un piquet **9,** par coopération directe d'une platine de fixation **10** solidaire dudit piquet avec le câble **4** à l'aplomb d'une boutonnière **6.**

Corollairement, au niveau de la base dudit piquet, deux écarteurs **11** rapportés de manière traditionnelle sur le piquet, coopèrent à leur tour chacun avec un autre câble **4,** là encore à l'aplomb d'une boutonnière **6,** pour aboutir à l'écartement du filet à ce niveau, par exemple de part et d'autre d'une rangée de vignes, et assurant ainsi sa protection, en l'espèce contre la grêle.

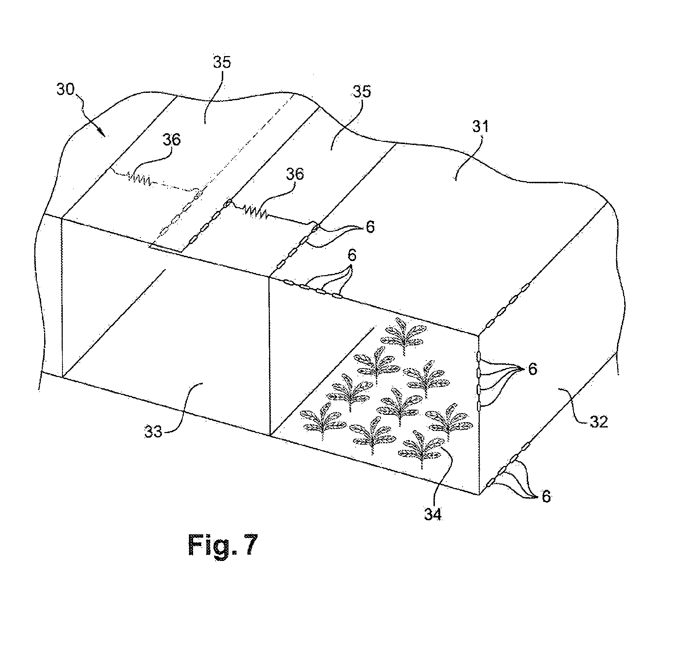

On a représenté en relation avec la figure 7 la mise en oeuvre de filets conformes à l'invention, aux fins de définir une enceinte de sécurisation de cultures, en l'espèce maraichères.

Ainsi donc, cette enceinte **30** est définie par un certain nombre de parois, respectivement supérieure **31,** latérales **32,** et frontales **33,** assurant la protection effective des plantes maraichères **34** contre tout type d'intempéries, et notamment la grêle ou la pluie, d'où qu'elles proviennent.

On a également représenté sur cette figure la mise en oeuvre de filets supérieurs **35,** escamotables le cas échéant, et tendus, par exemple au moyens de sandows **36,** permettant de conférer auxdits filets une certaine capacité de fléchissement, par exemple sous le poids de la grêle, sans engendrer leur rupture.

La figure 5a vise à illustrer le mode de réalisation de la partie fonctionnelle **1** du filet, c'est-à-dire la zone du filet assurant la fonction de protection, notamment contre le soleil, contre les intempéries et/ou contre les insectes.

Cette zone fonctionnelle n'a rien de spécialement originale et est parfaitement connue en soi. Elle est obtenue au moyen d'un métier Rachel avec ou sans insertion frontale de trame, et par exemple au moyen d'un métier de type Karl Mayer ou Liba.

En l'espèce le filet comporte au moins deux jeux de fils, les fils **20, 21, 22** travaillant selon un mode de maille spécifique, et les fils **23** et **24** travaillant en trame sectionnelle autour des mailles définies par les fils **20, 21, 22.** En outre, un troisième jeu de fils **27** est disposé en sens production (chaîne) de manière rectiligne, selon une configuration dénommée « cabestan ». Ce troisième jeu confère au filet une tenue similaire à un tissé dans le sens production, c'est-à-dire d'extensibilité réduite selon cette direction, alors même que l'on dispose d'une certaine extensibilité dans le sens travers ou trame en raison du mode de liaison des autres fils, permettant de fait de disposer d'une très bonne mise en tension sur les plantations à protéger.

En revanche, à la figure 5b, on a représenté les différentes zones de positionnement du câble **4,** respectivement les zones **8** (ou L2) où le câble est lié au filet, certes de manière lâche, et les zones **6** ou boutonnières dans lesquelles il est libre.

Au niveau des zones de liaison **8,** on observe qu'un jeu de fils **25** réalise des mailles selon deux lignes d'aiguille, le même fil **25** ne travaillant plus que sur une seule aiguille dans la zone libre **6.**

Corollairement, un deuxième fil **26** travaille en trame sectionnelle sous deux aiguilles au niveau de la zone de liaison **8,** et en revanche, ne travaille plus que sous une seule aiguille dans les zones libres **6.**

Ces armures sont très facilement paramétrables et réglables sur un métier Rachel, de sorte qu'en outre, avec l'insertion du câble **4** en sens production, la réalisation d'un tel filet s'avère particulièrement simple à réaliser, et d'un coût économique réduit.

En tout état de cause, le filet installé revient bien moins cher et s'avère en outre plus fiable du fait que le câble support est intégré et qu'aucune opération particulière supplémentaire n'est nécessaire pour rapporter ledit câble au sein du filet.

On peut optimiser le filet conforme à l'invention en insérant, également en sens production (sens chaîne), des fils de cuivre à intervalles plus ou moins réguliers en fonction de l'effet recherché. Ce mode de réalisation s'avère particulièrement avantageux, notamment dans le cadre de filet de protection de la vigne, puisqu'en raison de la mise en oeuvre de ces fils de cuivre, au contact avec les intempéries, il est délivré après oxydation du cuivre, les éléments nécessaires à la lutte contre le mildiou, permettant ainsi de s'affranchir des pesticides et autres traitements chimiques de plus en plus proscrits.

Dans certains cas, il peut même être envisagé l'insertion toujours en sens chaîne de fils chauffants, dont l'objectif est de préserver alors les plantations du froid et du gel. Les extrémités desdits fils, au niveau des bordures latérales du filet, sont alors soumises à une tension propre à générer par effet Joule l'effet thermique recherché. Dans une telle hypothèse, les fils constitutifs du filet fonctionnel sont adaptés pour résister à cette température et ne pas fondre.

Les fils chauffants peuvent en outre être reliés entre eux deux à deux au niveau de l'une des extrémités du filet, afin de constituer un aller-retour continu dans le filet et permettre ainsi une alimentation électrique à l'autre extrémité de l'installation. Ces fils chauffants peuvent aussi être reliés entre eux par des fils conducteurs.

On conçoit tout l'intérêt du filet de l'invention pour la protection des plantes de nature fruitière ou maraichère, en raison d'une part de sa simplicité de réalisation, et d'autre part, de sa simplicité de mise en place et d'installation.

## Revendications

1. Filet de protection de plantations fruitières ou maraichères, outre de pépinières contre le soleil et contre les intempéries, notamment contre la grêle ou la pluie, intégrant au moins un moyen linéaire de fixation sur deux ou plusieurs supports, ***caractérisé*** en ce qu'il définit des boutonnières (6, 6') sensiblement alignées, traversantes (6) ou non traversantes (6'), au niveau desquelles ledit moyen linéaire de fixation (4) est dépourvu de tout lien fixe et figé avec le filet.

2. Filet de protection selon la revendication 1, ***caractérisé*** en ce que les boutonnières (6, 6') sont séparées par des zones de liaison (8) dudit moyen linéaire de fixation au filet.

3. Filet de protection selon l'une des revendications 1 et 2, ***caractérisé*** en ce que le filet est positionnable selon toutes directions, notamment sensiblement horizontale, verticale ou inclinée.

4. Filet de protection selon l'une des revendications 1 à 3, ***caractérisé*** en ce que le filet est de type tricoté extensible selon une seule direction (sens trame ou sens travers), l'autre direction étant figée en termes d'extensibilité.

5. Filet de protection selon l'une des revendications 1 à 4, ***caractérisé*** en ce qu'il est réalisé en une seule étape au moyen d'un métier type Rachel à insertion frontale de trame ou non, le ou lesdits moyens linéaire de fixation (4) étant insérés sens chaîne, c'est-à-dire sens production.

6. Filet de protection selon l'une des revendications 1 à 5, ***caractérisé*** en ce que le filet est réalisé en polyéthylène, polypropylène, polyamide ou encore en PLA ou PBS ou un polymère biosourcé.

7. Filet de protection selon l'une des revendications 1 à 6, ***caractérisé*** en ce que la longueur des boutonnières (6, 6') est comprise entre 1 et 60 centimètres, et en ce que l'intervalle entre deux boutonnières consécutives est variable et est compris entre 1 centimètre et 1 mètre.

8. Filet de protection selon l'une des revendications 1 à 7, ***caractérisé*** en ce que le moyen linéaire de fixation est constitué par un câble (4) métallique, éventuellement plastifié, ou réalisé en matière plastique, notamment polyéthylène traité anti UV ou polyamide.

9. Filet de protection selon l'une des revendications 1 à 7, ***caractérisé*** en ce que le moyen linéaire de fixation (4) est constitué par une corde ou un sandow, susceptible de présenter des propriétés élastiques.

10. Filet de protection selon l'une des revendications 1 à 7, ***caractérisé*** en ce que le moyen linéaire de fixation est constitué par un ruban plat du type feuillard.

11. Filet de protection selon l'une des revendications 2 à 10, ***caractérisé*** en ce que les zones de liaison (8) du moyen linéaire de fixation (4) au filet, c'est-à-dire en dehors des boutonnières (6, 6'), sont réalisées par deux types de fils :
- l'un (25) maillant sur deux lignes d'aiguille ;
- l'autre (26) travaillant en trame sectionnelle également sous deux aiguilles.

12. Filet de protection selon l'une des revendications 1 à 11, ***caractérisé*** en ce qu'il comprend en sens chaîne ou sens production des fils de cuivre.

13. Filet de protection selon l'une des revendications 1 à 12, ***caractérisé*** en ce qu'il comprend en sens chaîne ou sens production des fils chauffants, susceptibles d'être connectés sur le secteur d'alimentation électrique ou sur une source autonome d'électricité type capteurs solaires ou batteries.

## Patentansprüche

1. Schutznetz für Obst- oder Gemüseplantagen, darüber hinaus Baumschulen, gegen Sonne und Unwetter, insbesondere gegen Hagel oder Regen, das mindestens ein linienförmiges Element zur Befestigung an zwei oder mehr Trägern enthält, **dadurch gekennzeichnet, dass** es im Wesentlichen aufgereihte, durchführende (6) oder nicht durchführende (6') Öffnungen (6, 6') bildet, in deren Bereich das linienförmig Befestigungselement (4) frei von jeglicher festen und mit dem Netz starr verbundenen Verbindung ist.

2. Schutznetz nach Anspruch 1, **dadurch gekennzeichnet, dass** die Öffnungen (6, 6') durch Bereiche (8) einer Verbindung des linienförmigen Befestigungselements mit dem Netz getrennt sind.

3. Schutznetz nach Anspruch 1 oder 2, **dadurch gekennzeichnet, dass** das Netz in allen Richtungen, insbesondere im Wesentlichen horizontal, vertikal oder geneigt positionierbar ist.

4. Schutznetz nach einem der Ansprüche 1 bis 3, **dadurch gekennzeichnet, dass** das Netz von der in einer einzigen Richtung (Schussrichtung oder Querrichtung) dehnbaren, gewirkten Art ist, wobei die andere Richtung hinsichtlich Dehnbarkeit starr ist.

5. Schutznetz nach einem der Ansprüche 1 bis 4, **dadurch gekennzeichnet, dass** es in einem einzigen Schritt mittels eines Webstuhls des Typs Rachel mit gegebenenfalls frontseitiger Schusszuführung gefertigt ist, wobei das oder die linienförmigen Befestigungselemente (4) in der Kettrichtung, d.h. Produktionsrichtung eingebracht sind.

6. Schutznetz nach einem der Ansprüche 1 bis 5, **dadurch gekennzeichnet, dass** das Netz aus Polyethylen, Polypropylen, Polyamid oder aber auch aus PLA oder PBS oder einem biobasierten Polymer gefertigt ist.

7. Schutznetz nach einem der Ansprüche 1 bis 6, **dadurch gekennzeichnet, dass** die Länge der Öffnungen (6, 6') zwischen 1 und 60 Zentimeter beträgt, und dass der Abstand zwischen aufeinanderfolgenden Öffnungen variabel ist und zwischen 1 Zentimeter und 1 Meter beträgt.

8. Schutznetz nach einem der Ansprüche 1 bis 7, **dadurch gekennzeichnet, dass** das linienförmig Befestigungselement aus einem gegebenenfalls kunststoffbeschichteten Metallseil (4) oder aus Kunststoff, insbesondere UVschutzbehandeltem Polyethylen oder Polyamid gefertigt ist.

9. Schutznetz nach einem der Ansprüche 1 bis 7, **dadurch gekennzeichnet, dass** das linienförmig Befestigungselement (4) aus einer Leine oder einem Gummiseil besteht, das elastische Eigenschaften an den Tag legen kann.

10. Schutznetz nach einem der Ansprüche 1 bis 7, **dadurch gekennzeichnet, dass** das linienförmig Befestigungselement aus einem Flachband des Typs Stahlband besteht.

11. Schutznetz nach einem der Ansprüche 2 bis 10, **dadurch gekennzeichnet, dass** die Bereiche (8) der Verbindung des linienförmigen Befestigungselements (4) mit dem Netz, d.h. außerhalb der Öffnungen (6, 6'), mit zwei Arten von Fäden gefertigt sind:
- wobei einer (25) über zwei Nadelreihen;
- der andere (26) sich im Querschnittsschuss ebenfalls unter zwei Nadeln durchzieht.

12. Schutznetz nach einem der Ansprüche 1 bis 11, **dadurch gekennzeichnet, dass** es in der Kettrichtung oder Produktionsrichtung Kupferfäden umfasst.

13. Schutznetz nach einem der Ansprüche 1 bis 12, **dadurch gekennzeichnet, dass** es in der Kettrichtung oder Produktionsrichtung Heizfäden umfasst, die an das Stromversorgungsnetz oder eine autonome Stromquelle des Typs Sonnenkollektor oder Batterien angeschlossen werden können.

## Claims

1. A net for protecting fruit and market-garden plantations, other than nurseries, from the sun and from inclement weather, particularly from hail or rain, including at least linear means of attachment onto two or more holders, ***characterized*** in that it defines substantially aligned buttonholes (6, 6'), provided in the form of through holes (6) or blind holes (6'), at the level of which said linear attachment means (4) is free of any fixed and firm connection with the net.

2. The protection net of claim 1, ***characterized*** in that the buttonholes (6, 6') are separated by areas (8) for binding said linear attachment means to the net.

3. The protection net of any of claims 1 and 2, ***characterized*** in that the net can be positioned in all directions, particularly substantially horizontally, vertically, or in inclined fashion.

4. The protection net of any of claims 1 to 3, ***characterized*** in that the net is of knitted type stretchable along a single direction (weft direction or cross direction), no stretching being provided in the other direction.

5. The protection net of any of claims 1 to 4, ***characterized*** in that it is formed in a single step by means of a Rachel-type knitting machine with or without frontal weft insertion, said linear attachment means (4) being inserted in the warp direction, that is, in the production direction.

6. The protection net of any of claims 1 to 5, ***characterized*** in that the net is made of polyethylene polypropylene, polyamide, or also of PLA or PBS or of a bio-based polymer.

7. The protection net of any of claims 1 to 6, ***characterized*** in that the length of the buttonholes (6, 6') is in the range from 1 to 60 centimeters, and in that the interval between two consecutive buttonholes is variable and is in the range from 1 centimeter to 1 meter.

8. The protection net of any of claims 1 to 7, ***characterized*** in that the linear attachment means are formed of a metal cable (4), possibly plastic coated, or made of a plastic material, particularly anti-UV treated polyethylene or polyamide.

9. The protection net of any of claims 1 to 7, ***characterized*** in that the linear attachment means (4) is formed by a rope or by a bungee cord capable of having elastic properties.

10. The protection net of any of claims 1 to 7, ***characterized*** in that the linear attachment means is formed by a flat band of strap type.

11. The protection net of any of claims 2 to 10, ***characterized*** in that the areas (8) for binding the linear attachment means (4) to the net, that is outside of the buttonholes (6, 6') are formed by two types of yams:
- one (25) meshing on two needle rows;
- the other one (26) working in sectional weft also under two needles.

12. The protection net of any of claims 1 to 11, ***characterized*** in that it comprises, in the warp direction, or production direction copper wires.

13. The protection net of any of claims 1 to 12, ***characterized*** in that it comprises, in the warp direction or production direction, heating wires, capable of being connected to the electric power supply mains or to an autonomous power source of solar sensor or battery type.
